# EUROPÄISCHE PATENTANMELDUNG

(11) **EP 2 955 821 A1**
(43) Veröffentlichungstag der Anmeldung: **16.12.2015**
(21) Anmeldenummer: 14171760.3
(22) Anmeldetag: 10.06.2014
(51) Int. Cl.: H02K 21/14

(54) **Antriebsvorrichtung für ein drehbares Element**

(71) Anmelder: Siemens Aktiengesellschaft, 80333 München (DE)
(72) Erfinder: Christ, Walter, 91336 Heroldsbach (DE)

(57) **Zusammenfassung**

Die Erfindung betrifft eine Antriebsvorrichtung (1) für ein drehbares Element (7), beispielsweise einer Walze (7). Das drehbare Element (7) ist in Bezug zu einem Statorelement (5) drehbar, insbesondere mit Hilfe eines Wälzlagers (13), mit dem zumindest einen Statorelement (5) verbunden, wobei das Statorelement (5) als Teil eines Gerüstes in einer Produktionsmaschine integriert ist. Vorteilhaft weist das zumindest eine Statorelement (5) zweite Magneteinheiten (11), insbesondere Elektromagnete (11, 11a) auf, die durch einen Wirkzusammenhang mit den ersten Magneteinheiten (9) das drehbare Element (7) rotatorisch antreiben. Vorteilhaft können die Bereiche, in denen die ersten Magneteinheiten (9) und/oder die zweiten Magneteinheiten (11) lokalisiert sind, in Form eines Blechpakets (5a, 7a) ausgeführt sein. Weiter vorteilhaft sind die rotationsinvarianten Seitenflächen des drehbaren Elements (7) zumindest teilweise zugänglich. So kann ein Medium, beispielsweise Dampf, in einen Hohlraum (17) des drehbaren Elements (7) eingeführt werden und durch Öffnungen (17a) an dem drehbaren Element (7) wieder entweichen.

## Beschreibung

Die Erfindung betrifft eine Antriebsvorrichtung und eine Produktionsmaschine, insbesondere eine Papiermaschine, die zumindest eine solche Antriebsvorrichtung aufweist.

Produktionsmaschinen besitzen oft eine Vielzahl von Antriebsvorrichtungen, insbesondere Elektromotoren. Die Antriebsvorrichtungen dienen zum Antrieb einer Welle, einer Walze und/ oder einer Umlenkrolle.

Gemäß dem derzeitigen Stand der Technik werden drehbare Elemente wie Wellen, Walzen oder Umlenkrollen mittels handelsüblichen Elektromotoren angetrieben, wobei der Rotor des Elektromotors ggf. über einen Drehmomentwandler, insbesondere einem Getriebe, und/oder über Gelenkstangen mit dem drehbaren Element verbunden ist. Nachteilig am derzeitigen Stand der Technik ist der erhöhte Wartungsaufwand eines solchen Antriebs, da eine Mehrzahl beweglicher Teile vorliegt.

Es ist daher Aufgabe der Erfindung, einen verbesserten Antrieb für ein drehbares Element, insbesondere zum Einsatz in einer Produktionsmaschine, bereitzustellen.

Die Aufgabe wird durch eine Antriebsvorrichtung gemäß Anspruch 1 gelöst.

Die Aufgabe wird weiter durch eine Produktionsmaschine, insbesondere eine Papiermaschine, gelöst, die zumindest eine solche Antriebsvorrichtung aufweist.

Die abhängigen Ansprüche stellen vorteilhafte Ausgestaltungsformen der Vorrichtung zum Antrieb eines drehbaren Elements dar.

Als drehbare Elemente kommen Walzen, Spindeln, Umlenkrollen und/oder Wellen in Betracht. Eine solche Antriebsvorrichtung ist auch zum rotatorischen Antrieb von anderen Elementen wie Reaktionsgefäße, Pulper usw. geeignet. Als erste Magneteinheiten dienen vorteilhaft Permanentmagnete, die in das Drehbare Element integriert und/oder auf dem drehbaren Element aufgebracht sind. Die zweiten Magneteinheiten sind entweder in das zumindest eine Statorelement integriert oder auf das zumindest eine Statorelement aufgebracht. Als zweite Magneteinheiten eigenen sich Elektromagnete, aufweisend jeweils eine Spule und ggf. einen (ferromagnetischen) Kern. Zum Antrieb werden die Spulen vorteilhaft mit einem zeitlich verändernden Strom durchlaufen, so dass durch den fließenden elektrischen Strom ein zeitlich verändertes Magnetfeld induziert wird. Das Magnetfeld dient vorteilhaft zum synchronen oder zum asynchronen Antrieb des drehbaren Elements.

Das drehbare Element ist rotierbar in dem zumindest einen Statorelement gelagert. Die Drehachse verläuft dabei parallel der Symmetrieachse des drehbaren Elements, also senkrecht zu den Seitenflächen (Stirnseiten) des drehbaren Elements. Die Lagerung des drehbaren Elements in den Statorelementen erfolgt vorteilhaft mit Hilfe zumindest eines Wälzlagers.

Vorteilhaft ist zur Positionierung des drehbaren Elements eine Mehrzahl, insbesondere zwei, Statorelemente vorgesehen. Die Statorelemente sind vorteilhaft lösbar miteinander verbunden, so dass ein Statorelement zur Wartung der Antriebvorrichtung entfernt werden kann, ohne dass das drehbare Element in seiner Position verändert wird.

Ein drehbares Element kann auf jeder Seite einer hier beschriebenen Antriebsvorrichtung zugeordnet sein. Beispielsweise an jedem Ende der Walze. Das drehbare Element kann auch nur auf einer Seite einer solchen Antriebsvorrichtung aufweisen, d.h. auf nur einer Seite erste Magneteinheiten aufweisen, wobei die ersten Magneteinheiten mit den zweiten Magneteinheiten in einer Wirkverbindung stehen.

Das Statorelement kann entweder für sich gefertigt sein und anschließend in die Produktionsmaschine integriert werden und/oder das zumindest eine Statorelement kann Teil des Grundgerüsts, Bestuhlung oder der Behausung der Produktionsmaschine sein. Falls das Statorelement Teil der Bestuhlung/Grundgerüsts/Bauhausung ist, so erfolgt die Fertigung zumeist nicht separat.

In einer vorteilhaften Ausgestaltung der Antriebsvorrichtung ist das zumindest eine Statorelement Teil des Gerüsts des Gehäuses und/oder der Bestuhlung der Produktionsmaschine.

Die Integration der Antriebsvorrichtung in das Gerüst, in der Bestuhlung und/oder dem Gehäuse ist vorteilhaft durch eine konstruktive Integration der Statorelemente in das Gerüst und/oder das Gehäuse der Produktionsmaschine, insbesondere der Papiermaschine, vorgesehen. Dabei bedeutet eine konstruktive Integration, dass die Bestuhlung, das Gerüst und/oder das Gehäuse mit dem Statorelement zusammen gefertigt wird und dass das Statorelement zumindest teilweise während der Herstellung der Bestuhlung, des Gerüsts und/oder des Gehäuses mitgefertigt und somit fester Bestandteil der Bestuhlung, des Gehäuses und/oder des Gerüsts wird.

Erste Magneteinheiten sind beispielsweise Permanentmagnete. Zweite Magneteinheiten sind beispielsweise Elektromagnete.

Die Antriebsvorrichtung, insbesondere das zumindest eine Statorelement, ist vorzugsweise zumindest teilweise geblecht ausgeführt. Das dabei entstehende Blechpaket kann auch direkt in ein Gerüst integriert sein, welches in der unmittelbaren Nähe der Produktionsmaschine lokalisiert ist und dennoch nicht direkt Teil der Produktionsmaschine ist.

Beispielsweise kann ein T-Träger (z.B. als Teil eines Gerüstes) dergestalt erweitert werden, dass der T-Träger an einer Stelle durchtrennt wird und zumindest ein Statorelement, insbesondere in Form eines, mit zweiten Magneteinheiten versehenen, Blechpaketes, eingepasst wird. Dem T-Träger kann auch seitlich ein Statorelement oder mehrere Statorelemente zugeordnet werden. Die Statorelemente können trotz ihrer Integration in das Gehäuse, der Bestuhlung und/oder dem Gerüst in einem solchen Fall vorteilhaft lösbar mit dem T-Träger (z.B. des Gerüstes) verbunden sein.

Vorteilhaft ist durch eine lösbare Verbindung der Statorelemente untereinander und mit den Elementen, an denen sie befestigt sind, eine einfache Wartung der Statorelemente möglich - ohne dass das drehbare Element in seiner Position zu verändern ist.

Das Statorelement kann auch auf das Gehäuse aufgesetzt werden, z.B. indem die Elektromagneten auf die Innenseite des Gehäuses montiert werden oder direkt um Teile des Gerüstes gewickelt werden, so dass das Gerüst als Spulenkern wirkt.

In einer weiteren vorteilhaften Ausgestaltung der Vorrichtung ist das drehbare Element mit Hilfe von zumindest einem Wälzlager drehbar gelagert.

Vorteilhaft ist das drehbare Element, beispielsweise die Welle, an beiden Seiten mit zumindest einem Wälzlager oder einem Kugellager drehbar gelagert. Die Wälzlager oder Kugellager können dem Stator und/oder dem Gerüst und/oder dem Gehäuse zugeordnet sein.

Zuordnung bedeutet in diesem Zusammenhang, dass das Wälzlager mit der Innenseite mit dem drehbaren Element verbunden ist und an seiner Außenseite mit dem zumindest einen Statorelement und/oder dem Gerüst/Gehäuse verbunden ist.

Vorteilhaft ist eine solche Verbindung zum Zwecke der vereinfachten Wartung lösbar zu gestalten. Denkbar ist eine Verbindung, die mit Hilfe einer Schraube erfolgt.

In einer weiteren vorteilhaften Ausgestaltung weist das drehbare Element an zumindest einer Stirnseite einen Aufsatz auf, wobei der Aufsatz die ersten Magneteinheiten aufweist.

Der Aufsatz ist vorzugsweise auf zumindest einer Stirnseite des drehbaren Elements befestigt. Als Aufsatz dient vorzugsweise ein Metallzylinder, der an seiner Außenseite über erste Magnetelemente verfügt. Die ersten Magnetelemente des Aufsatzes sind vorzugsweise in einem geblechten Bereich des Aufsatzes lokalisiert. Der Aufsatz wird mittels Befestigungselemente an der Stirnseite des drehbaren Elements, beispielsweise der Walze, lösbar befestigt. Der Aufsatz wird an das drehbare Element angepasst und/oder an diesem befestigt. Der Aufsatz ist an der Mantelfläche von dem zumindest einen Statorelement zumindest teilweise überdeckt.

Diese Ausführungsform erlaubt eine besonders einfache Wartung der Antriebsvorrichtung. Da der Aufsatz vorteilhaft eine Verlängerung der Mantelfläche darstellt, also die Normalenvektoren der Kreisflächen des drehbaren Elements und des Aufsatzes parallel verlaufen, ist ein einfacher Ausbau des Aufsatzes zu Wartungszwecken möglich. Falls lediglich das drehbare Element durch das Wälzlager positioniert wird, kann der Aufsatz isoliert ausgebaut werden und das drehbare Element in der Produktionsmaschine verbleiben.

In einer weiteren vorteilhaften Ausgestaltung weist das drehbare Element einen Aufsatz auf, wobei der Aufsatz direkt mit dem drehbaren Element mittels Befestigungsmittel, z.B. Schrauben, verbunden ist, wobei der Aufsatz die ersten Magneteinheiten aufweist.

In einer weiteren vorteilhaften Ausgestaltung der Vorrichtung ist das drehbare Element eine Walze, eine Trommel und/oder eine Umlenkrolle.

Das drehbare Element kann vorteilhaft jedes drehbare Element einer Produktionsmaschine sein, welches gemäß dem derzeitigen Stand der Technik mittels eines handelsüblichen Motors, insbesondere in Kombination mit einem Drehmomentwandler, insbesondere mit einem Getriebe, rotatorisch angetrieben wird. Besonders vorteilhaft ist eine hier beschriebene Antriebsvorrichtung zu einem Ersatz eines bestehenden Antriebes eines vorstehend ausgeführten drehbaren Elements geeignet.

Einsatzgebiete einer hier beschriebenen Antriebsvorrichtung sind Papiermaschinen, Druckmaschinen, insbesondere Rollendruckmaschinen, Walzwerke, Warenbänder, Laufbänder oder Antriebe für die Windungen von Kranen.

In einer weiteren vorteilhaften Ausgestaltung der Vorrichtung sind zwei oder mehrere Statorelemente zur Lagerung des drehbaren Elements vorgesehen, wobei die Statorelemente lösbar miteinander verbunden sind.

Die Verwendung mehrerer Statorelemente ermöglicht eine Wartung des Statorelements und/oder des drehbaren Elements, ohne die Position des drehbaren Elements zu verändern. Dies gilt insbesondere für ein einstückig ausgeführtes drehbares Element (ein drehbares Element ohne Aufsatz).

Mittels dieser Ausführung kann vorteilhaft ein Statorelement oder mehrere Statorelemente ausgetauscht werden und/oder der Bereich zwischen dem Statorelement und dem drehbaren Element gereinigt werden. Durch den zeitweisen Ausbau des zumindest einen Statorelements können z.B. die ersten Magneteinheiten und die zweiten Magneteinheiten gewartet, überprüft und/oder ausgetauscht werden, ohne das drehbare Element in seiner Position zu verändern.

Durch den Einsatz mehrerer Statorelemente, die lösbar miteinander und/oder lösbar mit dem Gerüst der Produktionsmaschine befestigt bzw. in das Gerüst/Gehäuse der Produktionsmaschine integriert sind, kann der Wartungsprozess der Antriebsvorrichtung stark vereinfacht werden.

Bei einer weiteren vorteilhaften Ausgestaltung der Antriebsvorrichtung sind die ersten Magneteinheiten an einer rotationsinvarianten Seitenfläche des drehbaren Elements angeordnet, wobei die zweiten Magneteinheiten in einer Wirkverbindung mit den ersten Magneteinheiten stehen.

Unter einer rotationsinvarianten Seitenfläche des drehbaren Elements versteht man beispielsweise eine Stirnseite oder eine Schnittfläche, deren Flächennormale parallel zur Rotationsachse des rotierenden drehbaren Elements verläuft. Der Normalenvektor der rotationsinvarianten Seitenfläche kann von der Mantelfläche des drehbaren Elements umschlossen werden.

Durch die vorstehend ausgeführte Möglichkeit der Anordnung können insbesondere die zweiten Magneteinheiten segmentartig angeordnet werden. Somit kann auch ein drehbares Element mit ausreichend ersten Magneteinheiten ausgestattet werden, selbst falls beispielsweise der Stumpf, insbesondere der Wellenstumpf, der Welle, bzw. der Aufsatz des drehbaren Elements, nur über einen kleinen Durchmesser verfügt.

In einer solchen Anordnung, die einem Segmentmotor nachgebildet ist, kann eine ausreichende Anzahl an Polen (in Wirkverbindung stehende Magneteinheiten) für ein hohes Drehmoment der Antriebsvorrichtung bereitgestellt werden.

In einer weiteren vorteilhaften Ausgestaltung der Antriebsvorrichtung sind Bereiche, in denen die ersten Magneteinheiten und/oder die zweiten Magneteinheiten lokalisiert sind, geblecht ausgeführt.

Die Ausstattung der Bereiche, in denen Magneteinheiten lokalisiert sind, mit einem Blechpaket führt zu einer Reduktion von Wirbelströmen, wobei die Wirbelströme durch das zeitlich veränderte Magnetfeld entstehen. Das bewegliche Element kann, in dem zumindest einen Bereich, in welchem die ersten Magneteinheiten lokalisiert sind, ein Blechpacket aufweisen, in das die ersten Magneteinheiten eingebracht und/oder aufgebracht werden. Vorteilhaft weisen auch die Statorelemente Blechpakete auf oder bestehen in ihrem Grundgerüst aus einem Blechpaket. Falls die Statorelemente wesentlich aus Teilen des Gerüstes der Produktionsmaschine bestehen, ist ein Blechpaket vorteilhaft an dem Gerüst zu befestigen bzw. zu integrieren. Das Blechpaket bildet dann zumindest einen Teil des Statorelements.

Vorteilhaft ist auch ein vorstehend ausgeführter Aufsatz zumindest teilweise geblecht auszuführen. Das Blechpaket ist vorteilhaft durch ein thermisch unterstütztes Aufschrumpfen (oder Einschrumpfen) mit dem Gehäuse, mit dem Gerüst, mit dem drehbaren Element, mit dem zumindest einen Statorelement, und/oder mit dem Aufsatz zu befestigen.

In einer weiteren vorteilhaften Ausgestaltung der Antriebsvorrichtung sind die ersten Magneteinheiten und die zweiten Magneteinheiten in ihrer Längsausrichtung unter einem spitzen Winkel zueinander angeordnet.

Vorteilhaft sind diejenigen Magneteinheiten, welche in einer gegenseitigen Wirkverbindung stehen, um ca. 2 bis 20 Grad entlang einer Außenkante (parallel zur Mantelfläche des drehbaren Elements) zueinander gewinkelt. Als Bezugsgrößen zur Bestimmung des Winkels dienen vorteilhaft die Feldlinien, welche den Verlauf der Magnetfelder der ersten Magneteinheiten und der zweiten Magneteinheiten symbolisieren. Als weitere Bezugsgröße kann auch die Ausrichtung von Seitenflächen oder Seitenkanten der ersten Magneteinheiten und der zweiten Magneteinheiten zueinander dienen.

Eine gewinkelte Ausrichtung der ersten und zweiten Magneteinheiten führt vorteilhaft zu einer geringeren Abhängigkeit des Drehmoments der Antriebsvorrichtung von einer Drehwinkelstellung des drehbaren Elements. Somit läuft das Antriebsystem ruhiger.

In einer weiteren vorteilhaften Ausführungsform der Antriebsvorrichtung ist das zumindest eine Statorelement seitlich an das Gerüst oder der Bestuhlung der Produktionsmaschine befestigt, wobei das drehbare Element durch das zumindest eine Statorelement gelagert ist.

Eine seitliche Befestigung der Statorelemente, insbesondere eine lösbare Befestigung der Statorelemente untereinander und/oder mit dem Gerüst, der Bestuhlung und/oder dem Gehäuse der Produktionsmaschine, dient vorteilhaft zu einer einfachen Montage der Antriebsvorrichtung. Überdies ist eine solche Antriebsvorrichtung vorteilhaft an eine bestehende Produktionsmaschine anbringbar. So kann eine bestehende Produktionsmaschine mit einer hier beschriebenen Antriebsvorrichtung ausgestattet werden, um den Wirkungsgrad der Produktionsmaschine, aufweisend eine solche Antriebsvorrichtung, zu verbessern. Ebenfalls vorteilhaft sind Statorelemente, welche mit Elementen des Gerüstes oder der Bestuhlung verbunden sind, dort lokalisiert, wo die Elemente des Gerüstes oder der Bestuhlung miteinander verbunden sind.

In einer weiteren vorteilhaften Ausgestaltung der Antriebsvorrichtung ist zum rotatorischen Antrieb des drehbaren Elements eine hochpolige Synchronantriebsvorrichtung vorgesehen.

Ein hochpoliger Synchronantrieb besteht aus einer Vielzahl von ersten und zweiten Magneteinheiten. Durch die hohe Zahl der (ersten und/oder zweiten) Magneteinheiten ist ein besonders hohes Drehmoment bei nur einer geringen Drehzahl möglich.

So kann insbesondere in einem Walzwerk bei einer langsamen Bearbeitung des Walzgutes eine gleichmäßige Drehzahl des drehbaren Elementes gewährleistet werden.

Bei einer Papiermaschine finden sich viele rotatorisch anzutreibende drehbare Elemente, welche zur Drehung mit einer geringen Drehzahl vorgesehen sind und durch eine hier beschriebene Antriebsvorrichtung ohne den Einsatz eines Drehmomentwandlers, z.B. eines Getriebes, angetrieben werden können.

Bei einer weiteren vorteilhaften Ausgestaltung der Antriebsvorrichtung weist das drehbare Element und/oder zumindest eines der Statorelemente eine Kühleinrichtung auf.

Eine Kühleinrichtung kann eine Luftkühlung oder eine Flüssigkeitskühleinrichtung sein. Durch die frei zugängliche Seitenfläche des drehbaren Elements kann das drehbare Element mit Kühlkanälen ausgestattet sein, welche zur Kühlung bzw. zur lokalen Kühlung desjenigen Bereiches des drehbaren Elements dienen, welches durch den Betrieb, insbesondere durch den Betrieb der Antriebsvorrichtung, erwärmt wird. Besonders vorteilhaft ist eine Kühleinrichtung zur Kühlung der gesamten Antriebsvorrichtung, aufweisend das zumindest eine Statorelement und (zumindest Teile) des drehbaren Elements.

Durch eine Integration von Kühlmittel-Kanälen in das Gerüst der Produktionsmaschine kann das zumindest eine Statorelement mit einem Kühlmittel versorgt werden. Auch der Stator selbst, insbesondere das Blechpaket, kann mit Kühlmittelkanälen ausgestattet sein.

Zur Ausführung der Kühleinrichtung kann eine bekannte Ausführungsform gewählt werden, wie z.B. übereinander lokalisierte Öffnungen in das Blechpaket zu integrieren und so ein Kühlmittelkanal, insbesondere für Luft, in das Blechpaket zu integrieren.

Die Kühleinrichtung der Antriebsvorrichtung kann vorteilhaft mit der vorhandenen Kühleinrichtung der Produktionsmaschine verbunden sein.

Durch die Kühleinrichtung kann der Wirkungsgrad der Antriebsvorrichtung vorteilhaft erhöht werden.

In einer weiteren vorteilhaften Ausführungsform weist das drehbare Element einen Hohlraum sowie optional Öffnungen auf.

Durch den Hohlraum lässt sich ein Medium, beispielsweise Dampf, durch die Walze transportieren. Der Dampf kann an einer Seitenfläche des drehbaren Elements vorteilhaft eingeführt werden und durch weitere Öffnungen, beispielsweise auf der Mantelfläche des drehbaren Elements angeordnet, entweichen. So kann beispielsweise ein Trocknungsprozess einer Papierbahn unterstützt werden.

Der Hohlraum dient zur Verteilung und zur Durchleitung des Mediums durch das drehbare Element. Die Öffnungen dienen zum Einlass und zum Auslass des Mediums. Als Medium ist Dampf, Luft, Wasser, ein Kohlenwasserstoff, beispielsweise zur Einwirkung auf eine Stoffbahn in der Produktionsmaschine vorgesehen.

Vorteilhaft sind die Öffnungen an den Flächen des drehbaren Elements lokalisiert, an denen das drehbare Element in Kontakt mit dem zu bearbeitenden, zu transportierenden oder zu trocknenden Material steht.

Durch einen solchen Hohlraum kann auch ein anderer Stoff geleitet werden, der auf das Material aufgebracht werden soll.

Im Folgenden wird die Erfindung anhand von Zeichnungen näher beschrieben und erläutert. Es zeigen
- FIG 1: ein Schema der Antriebsvorrichtung,
- FIG 2: ein weiteres Schema der Antriebsvorrichtung,
- FIG 3: an ein Gerüst angebrachte Statorelemente,
- FIG 4: ein drehbares Element mit Öffnungen,
- FIG 5: ein weiteres Schema einer Antriebsvorrichtung sowie
- FIG 6: eine Antriebsvorrichtung mit speziell angeordneten Magneteinheiten.

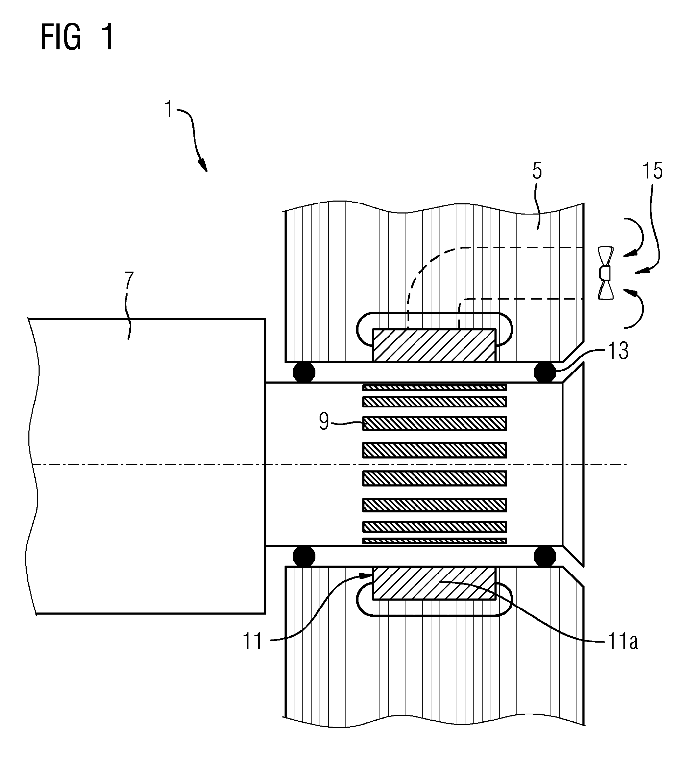

FIG 1 zeigt ein Schema der Antriebsvorrichtung 1. Gezeigt ist das drehbare Element 7, welches von oben und unten durch Statorelemente 5 in der horizontalen und vertikalen Position gehalten ist. Das drehbare Element 7 weist in dem Bereich, in dem es von den Statorelementen 5 ummantelt wird, erste Magneteinheiten 9 auf. Die ersten Magneteinheiten 9 sind entweder in das drehbare Element 7 integriert oder auf die Oberfläche des drehbaren Elements 7 aufgebracht. Zur Reduktion von Reibungseffekten beim Antrieb des drehbaren Elements 7 durch die Antriebsvorrichtung 1 dienen vorteilhaft Wälzlager 13. Die Wälzlager 13 können auch am Gehäuse 5, insbesondere dem Gehäuse 5 einer Produktionsmaschine und/oder direkt an den Statorelementen 5 lokalisiert sein. Die Statorelemente 5 weisen zweite Magneteinheiten 11 auf, wobei die zweiten Magneteinheiten 11 zur Wechselwirkung mit den ersten Magneteinheiten 9 des drehbaren Elements 7 in einer direkten Wirkverbindung stehen.

Die zweiten Magneteinheiten 11 sind vorteilhaft als Elektromagneten 11a, insbesondere durch eine stromdurchflossene Spule mit Kern, realisiert. Zur Kühlung des Statorelements und/oder des drehbaren Elements 7 weist das zumindest eine Statorelement 5 eine Kühleinrichtung 15 auf. Die Kühleinrichtung 15 kann gemäß einer bekannten Ausführungsform ausgeführt sein und ist hier nur symbolisch dargestellt.

In der in FIG 1 gezeigten Ausführung der Antriebsvorrichtung 1 sind die ersten Magneteinheiten 9 direkt auf dem drehbaren Element 7 montiert. Vorteilhaft bildet das drehbare Element 7, insbesondere die Walze oder der Trockenzylinder, den Rotor der Antriebsvorrichtung 1 selbst. Eine mechanische Verbindung des drehbaren Elements 7 mit einem Rotor eines zusätzlichen Antriebes entfällt somit.

In einer vorteilhaften Ausführung der Antriebsvorrichtung 1 sind die ersten Magneteinheiten 9 lösbar mit dem drehbaren Element 7 verbunden. Vorteilhaft sind auch die zweiten Magneteinheiten 11 mit dem zumindest einen Statorelement 5 lösbar verbunden. Dies vereinfacht den Wartungsprozess erheblich.

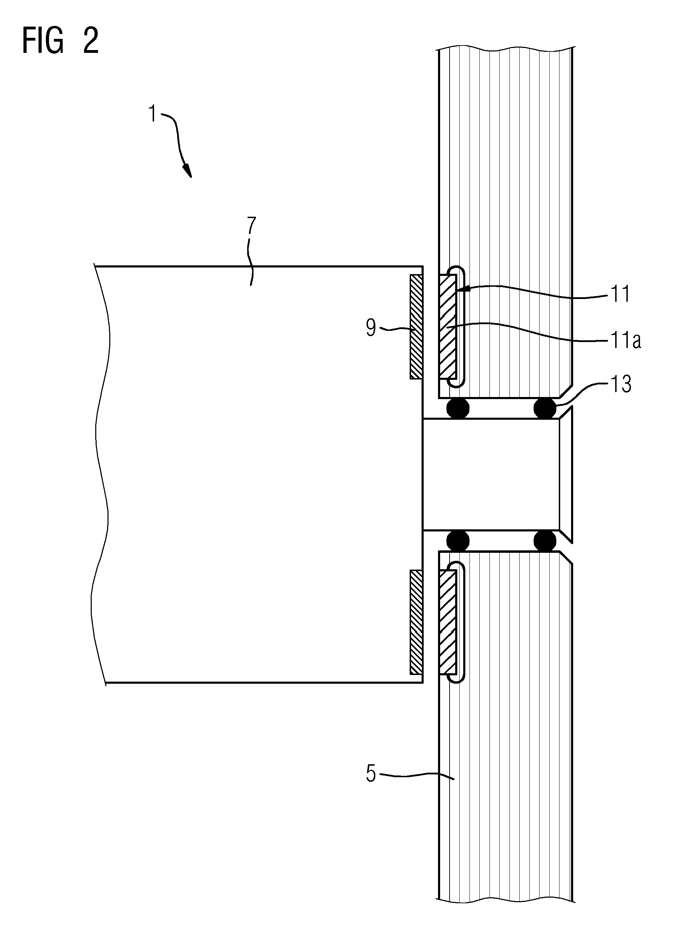

FIG 2 zeigt ein weiteres Schema der Antriebsvorrichtung 1. Bei der gezeigten Antriebsvorrichtung 1 befinden sich die ersten Magneteinheiten 9 an der Fläche des drehbaren Elements 7 (Stirnseite), dessen Normale in der gleichen Richtung wie die Drehrichtung des drehbaren Elements 7 verläuft. Gegenüber den ersten Magneteinheiten 9 befinden sich an dem zumindest einen Statorelement 5 lokalisiert, zweite Magneteinheiten 11. Die zweiten Magneteinheiten 11 sind als Elektromagnete 11a, insbesondere als stromdurchflossene Spulen, ausgeführt. Zur Verminderung von Reibungseffekten während der Rotation des drehbaren Elements 7 befindet sich zwischen den Statorelementen 5 und dem drehbaren Element 7 ein Wälzlager 13, welches durch die ausgefüllten Kreise zwischen dem Statorelement und dem drehbaren Element 7 symbolisiert sind. Vorteilhaft ist eine solche Antriebsvorrichtung 1 auch in einer Wand eines Gehäuses einer Produktionsmaschine integrierbar. In diesem Fall dient die Wand 5 als Statorelement 5. Falls das zumindest eine Statorelement 5 zumindest teilweise geblecht vorliegt, kann das zumindest eine Statorelement 5 auch direkt an einem Gerüst, an dem Gehäuse und/oder an einer Bestuhlung der Produktionsmaschine befestigt sein. Die Spulen der zweiten Magnetelemente 11 können dabei - wie gezeigt - in das Wand des Gehäuses integriert sein oder auch von einer Seite auf die Wand des Gehäuses aufgebracht sein. Somit bildet dann das Gehäuse das Statorelement 5.

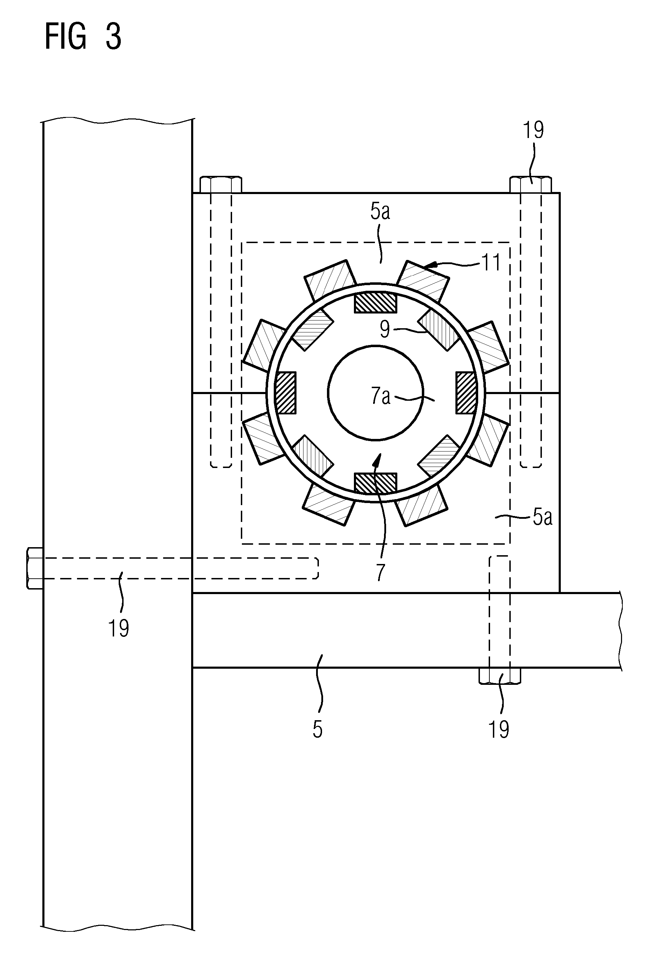

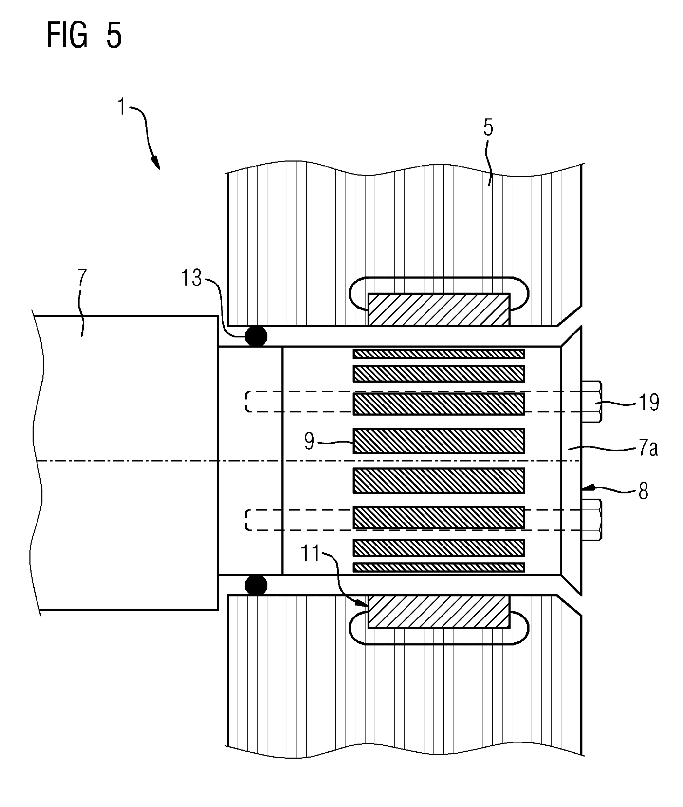

FIG 3 zeigt an ein Gerüst angebrachte Statorelemente 5. Die Statorelemente 5 werden lösbar mit dem Gerüst der Produktionsmaschine verbunden. Weiter zeigt die FIG 3, dass Teile der Statorelemente 5 durch ein Blechpaket 5a ersetzt sind. Das Blechpaket 5a weist vorteilhaft die zweiten Magneteinheiten 11 auf. Die Statorelemente 5 in Verbindung mit den Blechpaketen 5a umschließen bereichsweise das drehbare Element 7, wobei auch das drehbare Element 7 und/oder ein Aufsatz 8 (siehe FIG 5) zumindest ein Blechpaket 7a aufweist. Die Befestigung der Statorelemente 5 an dem Gerüst der Produktionsmaschine und/oder dem Gehäuse der Produktionsmaschine erfolgt durch Befestigungsmittel 19, wie Schrauben 19. Durch die Befestigungsmittel sind die Statorelemente 5 lösbar miteinander verbunden. Die Blechpakete 5a, 7a werden vorteilhaft durch ein Pressverfahren mit den Statorelementen 5 bzw. mit dem drehbaren Element 7 verbunden. Die ersten Magneteinheiten 9, insbesondere Permanentmagnete, sind in der gezeigten Ausführungsform in den geblechten Bereich 7a des drehbaren Elements 7, bzw. dem Aufsatz integriert.

Im Unterschied zu einem handelsüblichen Elektromotor, der einen Rotor antreibt, ist das drehbare Element 7 nicht lediglich der Rotor, der mit dem drehbaren Element 7 verbunden ist, sondern das angetriebene Element 7 ist die Walze, die Umlenkrolle, die Spindeln oder die Trocknungswalze selbst.

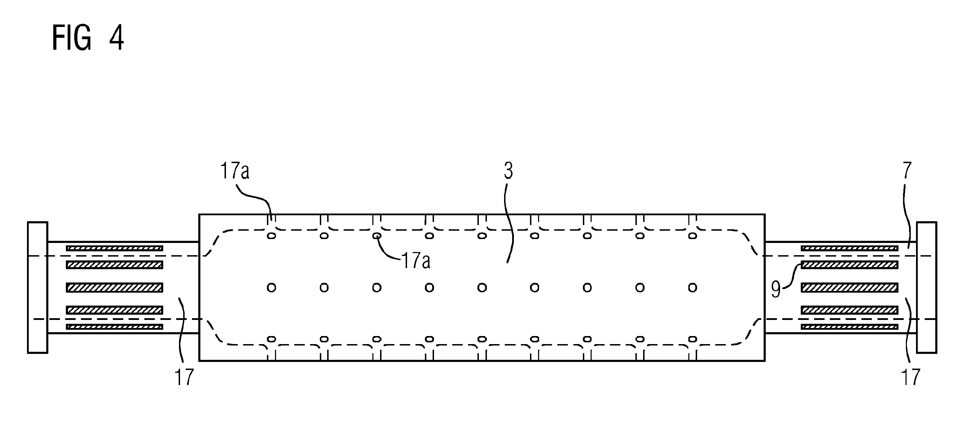

FIG 4 zeigt ein drehbares Element 7. Das drehbare Element 7 weist an seinen Seiten, jeweils an den Mantelflächen, (nahe den Enden der Mantelfläche) des drehbaren Elements, erste Magneteinheiten 9 auf. Das drehbare Element 7 weist weiter in seinem Innenraum einen Hohlraum 17 auf, wobei der Hohlraum 17 durch Öffnungen 17a zugänglich ist, die an den Seitenflächen (vorzugsweise als Eingang eines Mediums) und an der Mantelfläche (vorzugsweise als Ausgang für das Medium) des drehbaren Elements 7 lokalisiert sind. Der Hohlraum 17 in Verbindung mit den Öffnungen 17a dient zur Verteilung von dem Medium, beispielsweise Dampf und/oder eine Flüssigkeit. Beispielsweise ist die Öffnung 17 für den Eingang des Dampfes an zumindest einer Stirnseite des drehbaren Elements 7 angeordnet. Zum Auslass des Mediums, insbesondere des Dampfes, dienen die Öffnungen 17 an der Außenseite, insbesondere der Mantelfläche des drehbaren Elements 7, welche mit dem zu bearbeitenden Material in Berührung steht. Durch die Öffnungen 17a ist beispielsweise Dampf an das Material zu leiten, welches mit den Seitenflächen, welche die Öffnungen aufweisen, in Berührung kommt. Das drehbare Element 7 weist an jeder Seite erste Magneteinheiten auf, wobei die ersten Magneteinheiten 9 direkt mit dem drehbaren Element 7 verbunden sind. Die ersten Magneteinheiten 9 dienen zum Antrieb des drehbaren Elements 7, wobei für einen Antrieb die ersten Magneteinheiten in einer Wirkverbindung mit zweiten Magneteinheiten 11 stehen. Die zweiten Magneteinheiten sind an den Statorelementen 5 (nicht gezeigt) lokalisiert. Durch diese Wirkverbindung wird das drehbare Element 7 entlang seiner Rotationsachse zur Rotationsbewegung angetrieben.

FIG 5 zeigt ein weiteres Schema einer Antriebsvorrichtung 1. In dieser Ausführungsform ist eine Ausführung ähnlich der Ausführung wie in FIG 1 gezeigt ist, dargestellt.

In der gezeigten Ausführung ist das drehbare Element 7 nicht einstückig gefertigt. Bei der einstückigen Ausführung des drehbaren Elements sind die ersten Magneteinheiten 9 direkt mit dem drehbaren Element 5 verbunden.

In der in FIG 5 gezeigten Ausführung des Antriebsystems 1 dagegen ist das drehbare Element zumindest an einer Stirnseite mit einem Aufsatz 8 versehen. Der Aufsatz ist mit dem drehbaren Element 7 über zumindest ein Befestigungselement 19 verbunden. Die Verbindung des drehbaren Elements 7 mit dem Aufsatz 8 ist vorteilhaft lösbar gestaltet. Der Aufsatz weist die ersten Magneteinheiten 9 auf. Der Aufsatz 8 kann zumindest teilweise geblecht vorliegen. Der Aufsatz 8 weist an seiner Mantelfläche erste Magneteinheiten 9 auf.

Diese Ausführungsform ist besonders einfach zu warten, da der Aufsatz 8, der die ersten Magneteinheiten 9 aufweist, zur Wartung entfernt werden kann, ohne das drehbare Element 7 selbst aus der Produktionsmaschine zu entfernen. Im Unterschied zum Stand der Technik ist über den Aufsatz 8 das drehbare Element 7 direkt angetrieben und nicht mit einem separaten Rotor eines externen Antriebes verbunden.

Im Vergleich zu einem Rotor eines gewöhnlichen Elektromotors ist somit vorteilhaft der Aufsatz entfernbar, ohne dass ein Statorelement 5 und/oder das drehbare Element 7 selbst entfernt werden muss. Bei einem gewöhnlichen Elektromotor müsste der Stator des Elektromotors ebenfalls entfernt werden, um Zugang zum Rotor zu erhalten.

In dieser vorteilhaften Ausgestaltung ist das drehbare Element 7 selbst durch ein Wälzlager 13 mit dem zumindest einen Statorelement 5 verbunden. Der Aufsatz 8 ist somit ohne Problem aus dem Antriebsystem 1 entfernbar.

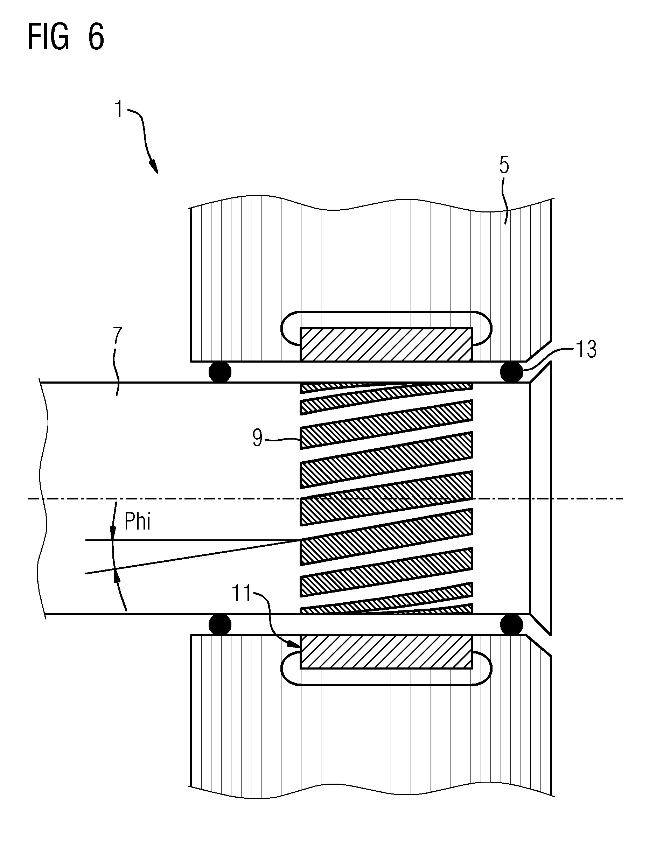

FIG 6 zeigt eine Antriebsvorrichtung 1 mit speziell angeordneten ersten Magneteinheiten 9. Die ersten Magneteinheiten 9 sind im Vergleich zu den zweiten Magneteinheiten gewinkelt. Die ersten Magneteinheiten 9 sind dabei unter einem Winkel Phi, insbesondere einem spitzen Winkel von einigen Grad, in Bezug zu den zweiten Magneteinheiten mit dem Aufsatz 8 befestigt. Der Winkel Phi wird durch die Lage der Kantenlinien der Magneteinheiten 9, 11 zueinander definiert. Ein optimaler Winkel Phi ergibt sich aus dem Abstand der ersten Magneteinheiten 9 bzw. der zweiten Magneteinheiten 11 jeweils zueinander. Entgegen der Darstellung können auch die ersten Magneteinheiten 9 parallel zur Rotationsrichtung des drehbaren Elements 7 angeordnet sein und die zweiten Magneteinheiten 11 unter dem Winkel Phi zu den ersten Magneteinheiten 9 angeordnet sein.

Zusammenfassend betrifft die Erfindung eine Antriebsvorrichtung für ein drehbares Element 7, beispielsweise einer Walze 7. Das drehbare Element 7 ist in Bezug zu einem Statorelement 5 drehbar, insbesondere mit Hilfe eines Wälzlagers 13, mit dem zumindest einen Statorelement 5 verbunden, wobei das Statorelement 5 als Teil eines Gerüstes in einer Produktionsmaschine integriert ist. Vorteilhaft weist das zumindest eine Statorelement 5 zweite Magneteinheiten 11, insbesondere Elektromagnete 11, 11a auf, die durch einen Wirkzusammenhang mit den ersten Magneteinheiten 9 das drehbare Element 7 rotatorisch antreiben. Vorteilhaft können die Bereiche, in denen die ersten Magneteinheiten 9 und/oder die zweiten Magneteinheiten 11 lokalisiert sind, in Form eines Blechpaket 5a, 7a ausgeführt sein. Weiter vorteilhaft sind die rotationsinvarianten Seitenflächen des drehbaren Elements 7 zumindest teilweise zugänglich. So kann ein Medium, beispielsweise Dampf, in einen Hohlraum 17 des drehbaren Elements 7 eingeführt werden und durch Öffnungen 17a an dem drehbaren Element 7 wieder entweichen.

## Patentansprüche

1. Antriebsvorrichtung (1) für ein drehbares Element (7) in einer Produktionsmaschine, insbesondere einer Papiermaschine, aufweisend das drehbare Element (7), wobei das drehbare Element erste Magneteinheiten (9) aufweist, wobei zweite Magneteinheiten (11) in zumindest einem Statorelement (5) integriert sind und/oder an dem zumindest einen Statorelement (5) angeordnet sind, wobei das drehbare Element (7) in Bezug zu dem zumindest einen Statorelement (5) drehbar gelagert ist und wobei die ersten Magneteinheiten (7) und die zweiten Magneteinheiten (11) zum rotatorischen Antrieb des drehbaren Elements (7) vorgesehen sind.

2. Antriebsvorrichtung (1) Anspruch 1, wobei das zumindest eine Statorelement (5) Teil des Gerüsts (5), des Gehäuses (5) und/oder der Bestuhlung (5) der Produktionsmaschine ist.

3. Antriebsvorrichtung (1) nach einem der vorangehenden Ansprüche, wobei das drehbare Element (7) an zumindest einer Stirnseite einen Aufsatz (8) aufweist, wobei der Aufsatz die ersten Magneteinheiten (9) aufweist.

4. Antriebsvorrichtung (1) nach einem der vorangehenden Ansprüche, wobei das drehbare Element (7) eine Walze (7), eine Trommel (7) und/oder einer Umlenkrolle (7) ist.

5. Antriebsvorrichtung (1) gemäß einem der vorangehenden Ansprüche, wobei zwei oder mehrere Statorelemente (5) zur Lagerung des drehbaren Elements (7) vorgesehen sind und wobei die Statorelemente (5) lösbar miteinander verbunden sind.

6. Antriebsvorrichtung (1) gemäß einem der vorangehenden Ansprüche, wobei die ersten Magneteinheiten (9) an einer rotationsinvarianten Seitenfläche des drehbaren Elements (7) angeordnet sind und wobei die zweiten Magneteinheiten (11) in einer Wirkverbindung mit den ersten Magneteinheiten (9) stehen.

7. Antriebsvorrichtung (1) gemäß einem der vorangehenden Ansprüche, wobei Bereiche (5a, 6a), in denen die ersten Magneteinheiten (9) und/oder die zweiten Magneteinheiten (11) lokalisiert sind, geblecht ausgeführt sind.

8. Antriebsvorrichtung (1) gemäß einem der vorangehenden Ansprüche, wobei die ersten Magneteinheiten (9) und die zweiten Magneteinheiten (11) in ihrer Längsausrichtung unter einem spitzen Winkel (Phi) zueinander angeordnet sind.

9. Antriebsvorrichtung (1) gemäß einem der vorangehenden Ansprüche, wobei das zumindest eine Statorelement (5) seitlich an das Gerüst (5) oder der Bestuhlung (5) der Produktionsmaschine befestigt ist und wobei das drehbare Element (7) durch das zumindest eine Statorelement (5) gelagert ist.

10. Antriebsvorrichtung (1) gemäß einem der vorangehenden Ansprüche, wobei zum rotatorischen Antrieb des drehbaren Elements (7) eine hochpolige Synchronantriebsvorrichtung (1) vorgesehen ist.

11. Antriebsvorrichtung (1) nach einem der vorangehenden Ansprüche, wobei das drehbare Element (7) und/oder zumindest eines der Statorelemente (5) eine Kühleinrichtung (15) aufweist.

12. Antriebsvorrichtung (1) nach einem der vorangehenden Ansprüche, wobei das drehbare Element (7) einen Hohlraum (17) sowie optional Öffnungen (17a) aufweist.

13. Produktionsmaschine (1), insbesondere eine Papiermaschine, aufweisend zumindest eine Antriebsvorrichtung (1) gemäß einem der vorangehenden Ansprüche.
